# EUROPEAN PATENT APPLICATION

(11) **EP 4 242 134 A1**
(43) Date of publication of application: **13.09.2023**
(21) Application number: 23159537.2
(22) Date of filing: 02.03.2023
(51) Int. Cl.: B65D 85/66, B60P 7/12

(54) **TRANSPORT SUPPORT FOR TRANSPORTING CYLINDRICAL OBJECTS**

(30) Priority: 07.03.2022 FI 20225201
(71) Applicant: Oyj Ahola Transport Abp, 67600 Kokkola (FI)
(72) Inventor: Nyblom, Åke, 67600 Kokkola (FI)
(74) Representative: Kolster Oy Ab

(57) **Abstract**

A transport support (1) for transporting cylindrical objects includes a base plate (2), which is arrangeable onto a transport base (4), and at least two wedge pieces (3). Each wedge piece (3) has at least one bevelled surface against which the cylindrical object is arrangeable to be supported on from its side. At least one of the wedge pieces (3) is detachably arranged into connection with the base plate (2) such that the mutual distance between the wedge pieces (3) is changeable by changing the position of at least one wedge piece (3).

## Description

### Background of the invention

The invention relates to the transport of cylindrical objects.

Cylindrical objects are, for example, paper or cardboards rolls, metal sheet reels and cable reels. Such cylindrical objects can weight even several tonnes, whereby their handling and transport are challenging. Paper and cardboard rolls are typically transported in the vertical position, because the rolls might become damaged at least from their surface in the horizontal position. However, the vertical transport position causes that, when lifting the rolls, they must be gripped from their sides, which sets specific requirements for the gripping heads of the devices lifting the rolls. Furthermore, the rolls being transported in the vertical position must be supported extremely carefully in order for the rolls not to be able to fall during transport. Metal sheet reels and cable reels can be transported in the horizontal position. When a cylindrical object is transported in the horizontal position, it can be lifted by a lifting apparatus which grips the object from its both ends. Gripping jaws of the lifting apparatus can be arranged from the ends of the cylindrical object e.g. from both ends of a hole in the cylindrical object to extend inside the hole. When a cylindrical object is transported in the horizontal position, the object must be supported carefully for the time of transport in order for it not to roll out of its place. In this case, the support has been e.g. a chute or a cradle to which the cylindrical object has been placed for the time of the transport. However, the chute or the cradle is a quite heavy and complex structure. On the other hand, various pieces and structures, which are often disposable, have commonly been used as support.

### Brief description of the invention

The object of the invention is thus to develop a novel type of a transport support for transporting cylindrical objects. The arrangement according to the invention is characterised by what is disclosed in the independent claims. Some embodiments of the invention are disclosed in the dependent claims.

In the shown arrangement, the transport support includes a base plate, which is arrangeable onto a transport base, and at least two wedge pieces. Each wedge piece has at least one bevelled surface against which the cylindrical object is arrangeable to be supported on from its side. At least one of the wedge pieces is detachably arranged into connection with the base plate such that the mutual distance between the wedge pieces is changeable by changing the position of at least one wedge piece. The transport base, onto which the base plate is arrangeable, can be e.g. a truck platform. Furthermore, the base plate is arrangeable onto a train's carriage or a ship's transport deck. The base plate is a flat plate, whereby pieces weighing several tonnes can be transported on the transport support. The base plate can be arranged in a desired point on the transport base, and the transport base can be a surface or plane suitable for the transport of any kind of heavy cylindrical objects. In the transport support, the cylindrical object can be transported in the horizontal position, that is, such that the central axis of the object is substantially in the horizontal direction. When the wedge piece is detachably attached such that the mutual distance of the wedge pieces is changeable, it is possible to transport cylindrical objects with various sizes of their length and/or diameter reliably on the transport support. Altogether, the transport support can support in a simple and reliable way various sizes of cylindrical objects during transport. After having used the transport support for transporting one cylindrical object, it can be used again for supporting a cylindrical object of the same size or a different size.

According to an embodiment, the mutual distance of the wedge pieces is changeable in a cross-direction in relation to the axial direction of the cylindrical object being transported to arrange the distance between the wedge pieces in accordance with the diameter of the cylindrical object being transported. Hence, one transport support can be reliably used for transporting cylindrical objects of different diameters.

According to an embodiment, the mutual distance of the wedge pieces is changeable in the axial direction of the cylindrical object being transported to arrange the distance between the wedge pieces in accordance with the length of the cylindrical object being transported. Hence, one transport support can be reliably used for transporting cylindrical objects of different lengths.

According to an embodiment, the detachable arrangement of the wedge piece into connection with the base plate is implemented by means of formed parts included in the base plate and corresponding formed parts included in the wedge piece. This type of arrangement is simple, reliable and easy to use.

According to an embodiment, the base plate includes several successive and/or adjacent formed parts such that the position of the wedge piece in the base plate is selectable by fitting the formed part of the wedge piece into connection with a desired formed part of the base plate. Therefore, the position of the wedge piece in relation to the base plate can be changed simply, easily and reliably.

According to an embodiment, the formed part in the base plate is an opening in the base plate or a slot on the upper surface of the base plate and the formed part in the wedge piece is a protrusion on the lower surface of the wedge piece corresponding the opening or the slot. This type of structure is simple and operationally reliable.

According to an embodiment, the formed part of the wedge piece is formed in the middle part of its lower surface. This way, the wedge piece is easy to use in terms of its usage and operation and durable in terms of its structure.

According to an embodiment, the transport support includes at least four wedge pieces detachably arranged into connection with the base plate. When there are at least four wedge pieces, the size and weight of one wedge piece are moderately small. Furthermore, the transport support can reliably support cylindrical objects during transport. Additionally, the transport support is easy, simple and versatile to arrange to be used for the transport of cylindrical objects of different sizes.

According to an embodiment, the at least one bevelled support surface in a wedge piece is a concave surface against which the side of the cylindrical object is arrangeable to be supported on. Hence, the curved side of the cylindrical object can be reliably supported into connection with the wedge piece.

According to an embodiment, the wedge piece has, on the first side, a first concave surface as its bevelled support surface and, on the second side, a second concave surface as its bevelled support surface, which first concave surface is more steeply concave than the second concave surface, whereby the wedge piece is arrangeable for a cylindrical object having a smaller diameter such that the side of the cylindrical object supports on the first concave surface, and the wedge piece is arrangeable for a cylindrical object having a larger diameter such that the side of the cylindrical object supports on the second concave surface. Then, it is possible to support a cylindrical object during transport only by turning the wedge piece both when the diameter is smaller and when the diameter is larger.

According to an embodiment, the wedge piece is formed of adjacent plywood plates attached to each other. This type of structure is easy and simple to form. Additionally, the structure is sturdy and rigid but still reasonable of its weight.

According to an embodiment, the wedge piece includes a recess at its end. Due to the recess, the wedge piece is easy to handle. Furthermore, the recess lightens the weight of the wedge piece, but does not weaken its structure substantially because the recess is at the end.

According to an embodiment, the base plate includes alignment markings and the wedge pieces include corresponding alignment markings, whereby the mutual distance of the wedge pieces is arrangeable to equal the size of the cylindrical object being transported by utilising the alignment markings. The alignment markings facilitate the positioning of the wedge pieces accurately in their correct places. Thus, awkward measurements and the insufficient support of the cylindrical object during transport are avoided.

### Brief description of the drawings

The invention is now described in closer detail in connection with some embodiments and with reference to the accompanying drawings, in which:
Fig. 1 shows a schematic diagonal top view of a transport support on a transport base;
Fig. 2 shows a schematic diagonal top view of a base plate;
Fig. 3 shows a schematic diagonal top view of a wedge piece;
Fig. 4 shows a side view of the wedge piece of Fig. 3;
Fig. 5 shows an end view of the wedge piece of Fig. 3;
Fig. 6 shows an exploded view of the wedge piece of Fig. 3;
Fig. 7 shows a schematic top view of a short reel on top of a transport support; and
Fig. 8 shows a schematic top view of a long reel on top of a transport support.

### Detailed description of the invention

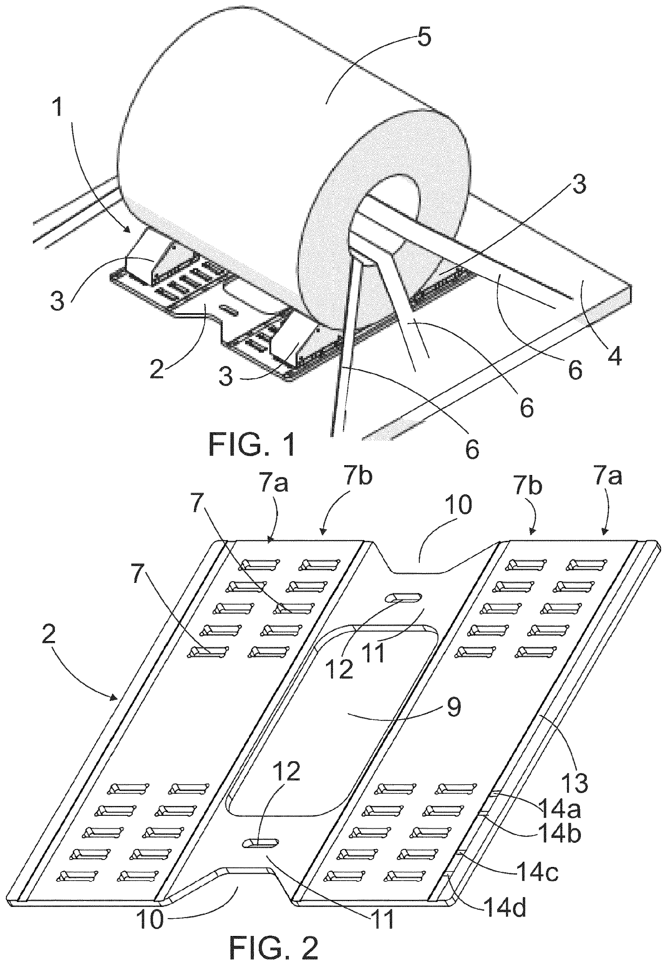

Fig. 1 shows a transport support 1. The transport support 1 includes a base plate 2. On top of the base plate 2 are arranged four wedge pieces 3, of which, three wedge pieces 3 are shown in Fig. 1.

The base plate 2 of the transport support 1 is arranged onto a transport base 4. The transport base 4 can be e.g. a truck platform. The transport base 4 can also be e.g. a train's carriage or a ship's transport deck. The base plate 2 can be arranged in a desired point on the transport base 4, and the transport base 4 can be a surface or plane suitable for the transport of any kind of heavy cylindrical objects. The position of the base plate 2 on the transport base 4 can thus be freely selected e.g. such that the centre of gravity on the transport base 4 is set at a desired point. The weight of the object being transported is divided in the area of the whole base plate 2, that is, the weight is divided in the area of the whole transport support 1, whereby no separate loads are directed at the transport base 4.

The base plate 2 is a flat plate. The thickness of the base plate 2 can be e.g. 10-50 mm. The object being transported is set on top of the base plate 2. Because the base plate 2 is a flat plate, the centre of gravity of the object being transported rises only a little, i.e. for the thickness of the base plate 2, higher compared with a situation in which the object being transported is to be set directly on the surface of the transport base 4.

On the transport support 1 is arranged a sheet metal reel 5 on top of the base plate 2 and the wedge pieces 3. The reel 5 is in the horizontal position, that is, such that the central axis of the reel 5 is substantially in the horizontal direction. Instead of the sheet metal reel 5, some other cylindrical object, such as a cable reel or even a paper or cardboard roll, can be arranged on top of the transport support 1 for transport, if wishing to transport such objects in the horizontal position. Quite heavy pieces can be transported on top of the transport support 1. The cylindrical object being transported can weight several tonnes. The weight of the object being transported can be e.g. more than 3,000 kg or e.g. more than 5,000 kg.

Through the open middle part of the reel 5 are arranged binding straps 6. The binding straps 6 can be attached from their both ends into connection with the transport base 4. This way, the reel 5 can be reliably attached to be kept in place in relation to the transport support 1. On the other hand, the transport support 1 can be reliably kept in place in relation to the transport base 4.

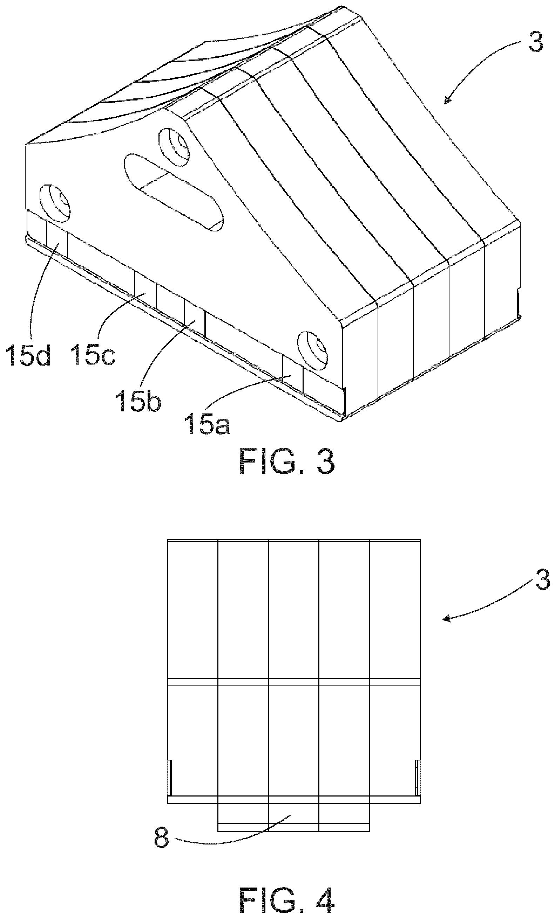

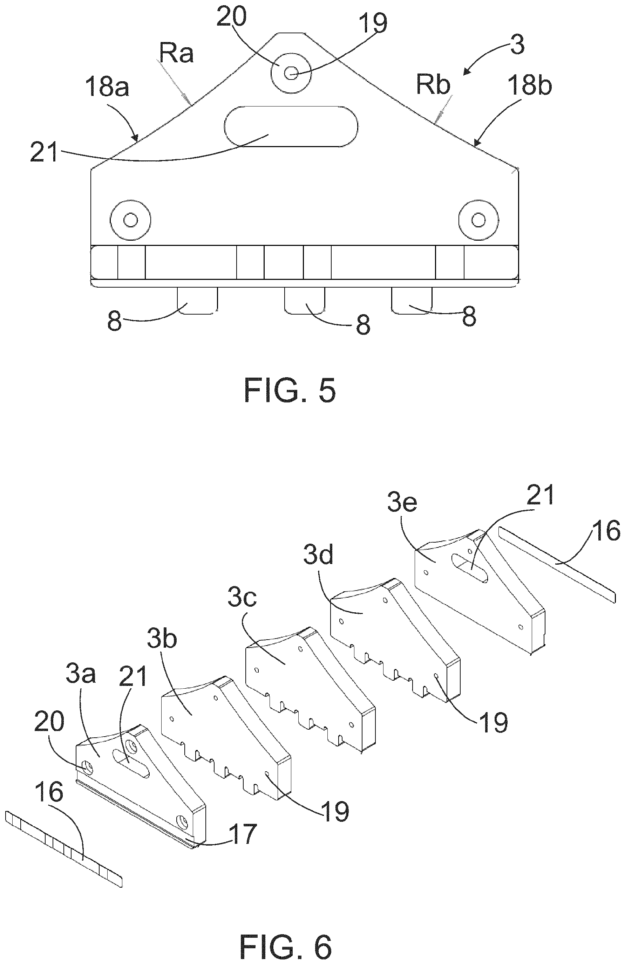

As seen from Figs. 1 and 2, the base plate 2 includes openings 7. As seen e.g. from Figs. 4 and 5, the lower surface of the wedge piece 3 includes protrusions 8 corresponding the openings 7. The length and width of each protrusion 8 are equivalent to the length and width of the opening 7. The length and the width of the protrusion 8 can be e.g. smaller than the length and width of the opening 7 with a suitable tolerance. For the protrusion 8, the base plate 2 does not necessarily have to include an opening going through the plate 2 but, if the thickness of the base plate is sufficient, there might be a sufficiently deep slot on the upper surface of the base plate for the protrusion 8.

Each corner of the base plate 2 includes several openings 7. Each corner has openings 7 in two opening arrays 7a and 7b. In the embodiment of Fig. 2, each opening array 7a and 7b has five openings 7 successively.

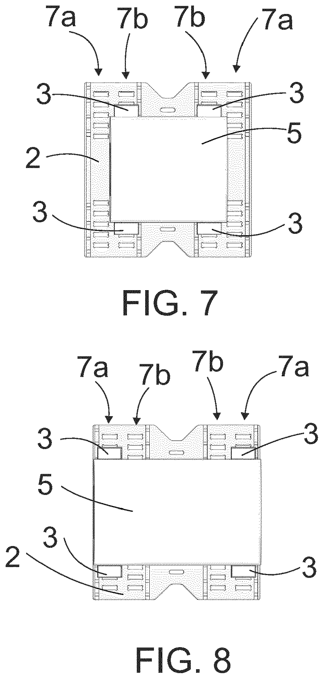

In each corner, the wedge piece 3 can be fitted either to the outer opening array 7a or the inner opening array 7b. When wishing to transport a short reel 5, the length of which can be e.g. 1,200 mm or less, on the transport support 1, each wedge piece 3 is fitted in the point of the inner opening array 7b. This situation is shown in Fig. 7.

When wishing to transport a long reel 5, the length of which can be e.g. more than 1,200 mm, on the transport support 1, each wedge piece 3 is fitted in the point of the outer opening array 7a. This situation is shown in Figure 8.

The wedge pieces 3 can also be fitted such that, in one corner, the wedge piece 3 is fitted at the point of the outer opening array 7a and, in another corner, at the point of the opening array 7b. However, such an arrangement is not as preferable as the solutions shown in Figs. 7 and 8 from the viewpoint of the symmetric division of weight.

In the embodiments shown in the figures, the base plate 2 includes in each opening array 7a and 7b five openings 7 successively. The wedge pieces 3 equivalently have three protrusions 8 successively. When the wedge piece 3 includes at least one protrusion 8 less that there are openings 7 in the opening array 7a and 7b in the corner of the base plate 2, the position of the wedge piece 3 can be changed in the base plate 2 such that the mutual distance of the wedge pieces 3 is changeable in a cross-direction in relation to the axial direction of the cylindrical object being transported to arrange the distance between the wedge pieces 3 in accordance with the diameter of the cylindrical object being transported. Thus, the wedge piece 3 can be fitted in a desired point in the longitudinal direction of the opening array 7a or 7b. When there are five openings 7 in the opening array 7a and 7b and the wedge piece 3 has three protrusions 8 successively, the wedge piece 3 can be fitted in three different points in the opening array 7a and 7b.

Such as seen e.g. from Figs. 3 and 4, the formed part i.e. the protrusions 8 of the wedge piece 3 are formed in the middle part of the lower surface of the wedge piece 3. This way, the protrusions 8 are quite well protected from blows and the wedge piece 3 is thus easy to use in terms of its usage and operation and durable in terms of its structure.

In the middle part of the base plate 2, there is a central opening 9. Furthermore, recesses 10 are formed on the edges of the middle part of the base plate 2. Thus, the edge parts of the base plate 2, where the openings 7 are situated, are connected to each other by strips 11. Additionally, carrying openings 12 are formed in the strips 11. Due to the carrying openings 12, the base plate is easily liftable and transferrable by taking hold of the carrying openings 12. Due to the openings 9 and 12 and the recesses 10, the structure of the base plate 2 can be obtained as light as possible. The base plate 2 is still rigid and durable of its structure. The thickness of the base plate 2 can be e.g. 10-50 mm.

The material of the base plate 2 can be e.g. plywood. The use of other materials, such as massive wood, metal, such as aluminium, or plastic, is also possible. Due to its weight and durability, plywood is an extremely suitable material for this purpose.

The base plate 2 includes alignment markings 14a-14d. Fig. 2 schematically illustrates the alignment markings only in one part of the base plate 2, but there are alignment markings in each part of the base plate 2 where the wedge piece 3 can be fitted. At their both ends, the wedge pieces 3 include corresponding alignment markings 15a-15d, as schematically illustrated in Fig. 5.

The alignment markings can be arranged in the wedge pieces 3 such that the alignment markings are formed in stickers 16. The stickers 16 are then fitted in the slots 17 at the ends of the wedge piece 3. The alignment markings can be arranged in the base plate 2 in a similar way by means of stickers and slots. For clarity, Fig. 2 does not show the stickers, but slots 13 formed for the stickers are visible in Fig. 2.

The alignment markings are utilised such that e.g. the alignment marking 15a of the wedge piece 3 is set at the point of the corresponding alignment marking 14a of the base plate 2, when wishing to have a specific distance for the wedge pieces 3, the alignment marking 15b of the wedge piece 3 is set at the point of the corresponding alignment marking 14b of the base plate 2, when wishing to have some other specific distance for the wedge pieces etc. The correspondence of the alignment markings can be shown e.g. by colour coding, whereby the user knows to align the alignment markings of the same colour to obtain a specific distance. Furthermore, the correspondence of the alignment markings can be shows by symbols, figures or equivalents.

The wedge piece 3 has two bevelled support surfaces. The first bevelled support surface is steeper than the second bevelled support surface. Hence, it is possible to select by turning the wedge piece 3 if the more steep bevelled support surface or the less steep bevelled support surface supports the cylindrical object.

Furthermore, the bevelled support surfaces are concave surfaces. On one side of the wedge piece 3, there is a first concave surface 18a as the bevelled support surface and, on the other side, there is a second concave surface 18b as the bevelled support surface. The first concave surface 18a is more steeply concave than the second concave surface 18b. The wedge piece 3 is arrangeable for a cylindrical object having a smaller diameter such that the side of the cylindrical object supports on the first concave surface 18a, and the wedge piece 3 is arrangeable for a cylindrical object having a larger diameter such that the side of the cylindrical object supports on the second concave surface 18b.

The concave surface 18a and 18b can be of the shape of a circular arc or concave in some other way, such as of the shape of a spiral arc. In Fig. 5, the concave surfaces 18a and 18b are of the shape of a circular arc. A radius of curvature Ra of the first concave surface 18a is smaller than a radius of curvature Rb of the second concave surface 18b.

The radius of curvature Ra of the first concave surface 18a can be e.g. 600 mm. Then, the wedge piece 3 should be set such that the first concave surface 18a is set to support cylindrical objects having a diameter of 1,200 mm or smaller. Then, the radius of curvature of the cylindrical object in question is 600 mm or smaller.

The radius of curvature Rb of the second concave surface 18b can be e.g. 800 mm. Then, the wedge piece 3 should be set such that the second concave surface 18b is set to support cylindrical objects having a diameter of more than 1,200 mm but preferably less than 1,600 mm. Then, the radius of curvature of the cylindrical object in question is more than 600 mm but at the most 800 mm.

When the radius of curvature of the cylindrical object equals the radius of curvature of the concave surface 18a or 18b, the cylindrical object is supported on the wedge piece 3 in a quite large area. If the radius of curvature of the cylindrical object is smaller than the radius of curvature of the concave surface 18a or 18b, the object is supported on the wedge piece 3 linearly but is not able to substantially roll out its place. If the radius of curvature of the cylindrical object is larger than the radius of curvature of the concave surface 18a or 18b, the object is supported on the wedge piece 3 from the upper and lower part of the concave surface 18a or 18b but not at its middle. Then, load is not directed at the wedge piece 3 in an optimal way.

The material of the wedge piece 3 can be e.g. plywood. The use of other materials, such as massive wood, metal, such as aluminium, or plastic, is also possible. Due to its weight and durability, plywood is an extremely suitable material for this purpose.

As illustrated in Figs. 3, 4 and 6, the wedge piece 3 is formed of adjacent plates 3a-3e attached to each other. Preferably, the plates 3a-3e are of plywood. The thickness of the plate can be e.g. 10-50 mm. The shapes of the middle plates 3b, 3c and 3d of the wedge piece 3 are identical. The end plates 3a and 3e of the wedge pieces 3 are mirror symmetrical.

In order to attach the plates 3a-3e to each other, they are provided with holes 19. Through the holes 19, it is possible to fit e.g. a bolt or a threaded bar. The plates 3a-3e can be tightened against each other by a nut turned on the bolt or the threaded bar. There are recesses 20 formed at the end plates 3a and 3e for the end of the nut and/or the bolt end.

There is a recess 21 at the ends of the wedge piece 3. Hence, the wedge piece 3 is easy to take hold of from its ends and the handling of the wedge piece 3 is easy. Furthermore, the recesses 21 substantially lighten the weight of the wedge piece 3 without weakening its durability. The recess 21 can be formed e.g. such that openings are formed in the end plates 3a and 3e.

The transport support 1 can also be formed such that the base plate 2 includes at least one shape corresponding the wedge piece together as a fixed structure. Then, the transport support should include at least one detachably attached wedge piece 3, the position of which can be changed in relation to the fixed shape of the base plate 2 corresponding the wedge piece. However, the base plate 2 does not preferably include a corresponding shape, because then the base plate 2 is obtained simpler. Furthermore, the transport support 1 preferably includes at least four detachably attached wedge pieces 3, the position of which in the base plate 2 can be changed in relation to each other. Then, the transport support 1 can be fitted in a more versatile way for cylindrical objects having different shapes. Additionally, the base plate 2 is then simple and the wedge pieces 3 are of relatively small size.

Those skilled in the art will find it obvious that, as technology advances, the basic idea of the invention can be implemented in many different ways. The invention and its embodiments are thus not restricted to the examples described above but may vary within the scope of the claims.

## Claims

1. A transport support for transporting cylindrical objects, which transport support (1) includes
a base plate (2) which is a flat plate and arrangeable onto a surface or platform of any transport vehicle of heavy cylindrical objects, whereby objects weighing several tonnes are transportable on top of the transport support (1) and
at least two wedge pieces (3) which each wedge piece (3) has at least one bevelled surface against which the cylindrical object is arrangeable to be supported on from its side,
at least one of which wedge pieces (3) is detachably arranged into connection with the base plate (2) such that the mutual distance between the wedge pieces (3) is changeable by changing the position of at least one wedge piece (3).

2. A transport support according to claim 1, wherein the mutual distance of the wedge pieces (3) is changeable in a cross-direction in relation to the axial direction of the cylindrical object being transported to arrange the distance between the wedge pieces (3) in accordance with the diameter of the cylindrical object being transported.

3. A transport support according to claim 1 or 2, wherein the mutual distance of the wedge pieces (3) is changeable in the axial direction of the cylindrical object being transported to arrange the distance between the wedge pieces (3) in accordance with the length of the cylindrical object being transported.

4. A transport support according to any one of the previous claims, wherein the detachable arrangement of the wedge piece (3) into connection with the base plate (2) is implemented by means of formed parts included in the base plate (2) and corresponding formed parts included in the wedge piece (3).

5. A transport support according to claim 4, wherein the base plate (2) includes several successive and/or adjacent formed parts such that the position of the wedge piece (3) in the base plate (2) is selectable by fitting the formed part of the wedge piece (3) into connection with a desired formed part of the base plate (2).

6. A transport support according to claim 4 or 5, wherein the formed part in the base plate (2) is an opening (7) in the base plate or a slot on the upper surface of the base plate and the formed part in the wedge piece (3) is a protrusion (8) on the lower surface of the wedge piece (3) corresponding the opening or the slot.

7. A transport support according to any one of claims 4-6, wherein the formed part of the wedge piece (3) is formed in the middle part of its lower surface.

8. A transport support according to any one of the previous claims, wherein the transport support (1) includes at least four wedge pieces (3) detachably arranged into connection with the base plate (2).

9. A transport support according to any one of the previous claims, wherein the at least one bevelled support surface in the wedge piece (3) is a concave surface (18a, 18b) against which the side of the cylindrical object is arrangeable to be supported on.

10. A transport support according to any one of the previous claims, wherein the wedge piece (3) has, on the first side, a first concave surface (18a) as its bevelled support surface and, on the second side, a second concave surface (18b) as its bevelled support surface, which first concave surface (18a) is more steeply concave than the second concave surface (18b), whereby the wedge piece (3) is arrangeable for a cylindrical object having a smaller diameter such that the side of the cylindrical object supports on the first concave surface (18a), and the wedge piece (3) is arrangeable for a cylindrical object having a larger diameter such that the side of the cylindrical object supports on the second concave surface (18b).

11. A transport support according to any one of the previous claims, wherein the wedge piece (3) is formed of adjacent plywood plates (3a - 3e) attached to each other.

12. A transport support according to any one of the previous claims, wherein the end of the wedge piece (3) includes a recess (21).

13. A transport support according to any one of the previous claims, wherein the base plate (2) has alignment markings (14a-14d) and the wedge pieces (3) have corresponding alignment markings (15a-15d), whereby the mutual distance of the wedge pieces (3) is arrangeable by utilising the alignment markers (14a-14d, 15a-15d) to correspond the size of the cylindrical object being transported.

14. An arrangement for transporting cylindrical objects, which arrangement includes a transport base (4), into connection with which is arranged at least one transport support (1) according to any one of claims 1-13.

15. A method for transporting cylindrical objects, in which method, arranging onto the transport base (4) of a transport means at least one transport support (1) according to any one of claims 1-13, arranging on top of the transport support (1) a cylindrical object in the horizontal position, and binding the object and the transport support (1) into connection with the transport base.
